# EUROPÄISCHE PATENTANMELDUNG

(11) **EP 2 631 015 A2**
(43) Veröffentlichungstag der Anmeldung: **28.08.2013**
(21) Anmeldenummer: 13151488.7
(22) Anmeldetag: 16.01.2013
(51) Int. Cl.: B06B 1/06

(54) **Ultraschallwandler zur Anregung und/oder zur Detektion von Ultraschall unterschiedlicher Frequenzen**

(30) Priorität: 24.02.2012 DE 102012003495
(71) Anmelder: Fraunhofer-Gesellschaft zur Förderung der angewandten Forschung e.V., 80686 München (DE)
(72) Erfinder: Heuer, Henning, 01324 Dresden (DE); Herzog, Thomas, 01159 Dresden (DE)
(74) Vertreter: Pfenning, Meinig & Partner GbR

(57) **Zusammenfassung**

Die vorliegende Erfindung bezieht sich auf einen Ultraschallwandler (sowie ein entsprechendes Herstellungsverfahren für einen solchen) zur Anregung und/oder zur Detektion von Ultraschall mehrerer unterschiedlicher Frequenzen, welcher ein ein Substrat und mehrere jeweils zur Schallemission anregbare und/oder zur Schalldetektion auslesbare Sensorelemente aufweist, die jeweils eine auf dem Substrat abgeschiedene piezoelektrische Schicht umfassen, wobei sich die Dicke (da, db, ...) und/oder das Material (ma, mb, ...) der piezoelektrischen Schichten mehrerer der Sensorelemente voneinander unterscheidet/n.

## Beschreibung

Die vorliegende Erfindung bezieht sich auf einen Ultraschallwandler zur Anregung und/oder zur Detektion von Ultraschall mehrerer unterschiedlicher Frequenzen.

Eigenschaften von Werkstoffen (mechanische Spannungen, Gefügestrukturen, chemische Zusammensetzung usw.) beeinflussen die Geschwindigkeit und die Dämpfung von durch den Werkstoff laufenden Ultraschallwellen. In Zusammenhang mit den geometrischen Eigenschaften von Schichten (beispielsweise Schichtdicke) können über die Ultraschalllaufzeit und die Ultraschalldämpfung Werkstoffkenngrößen zerstörungsfrei bestimmt werden. Durch die Verwendung mehrerer Ultraschallfrequenzen (Ultraschallspektroskopie) in einem breiten Frequenzbereich von beispielsweise 5 MHz bis 500 MHz können komplexe Werkstoffdaten einer Probe gewonnen werden. Für die Ultraschallspektroskopie werden Sensoren benötigt, die über den gesamten Frequenzbereich effizient Ultraschallwellen anregen und detektieren können.

Aus dem Stand der Technik bekannte, konventionelle Ultraschallwandler (nachfolgend werden diese Wandler alternativ auch als Ultraschallsensoren bezeichnet) sind jedoch sowohl im Frequenzbereich (Mittenfrequenz) als auch in der erreichbaren Bandbreite begrenzt. So beschreibt z.B.
http://www.ultrasonic-scientific.com/Applications/pdf/SpectroscopyEurope.pdf
wie in der Materialwissenschaft und in der Medizintechnik Proben mit einer Ultraschallspektrospietechnik untersucht werden können. Bei dieser Technik werden mechanisch (z.B. Revolver) mehrere Ultraschallsensoren mit unterschiedlichen Frequenzen hintereinander durchgeschaltet. Laborgeräte auf dieser Basis sind jedoch große und aufwendige System, die weder für den wissenschaftlichen Betrieb noch für robuste Anwendungen in industrieller Umgebung geeignet sind.

Ausgehend vom Stand der Technik ist es daher die Aufgabe der vorliegenden Erfindung Ultraschallwandler (nachfolgend auch als Ultraschallsensoren bezeichnet) zur Verfügung zu stellen, die mit einem vergleichsweise einfachen und kostengünstigen Aufbau die Anregung und/oder die Detektion (insbesondere: die Anregung und die Detektion) von Ultraschall unterschiedlicher Frequenzen über einen breiten Frequenzbereich erlauben. Weitere Aufgabe der vorliegenden Erfindung ist es, ein Herstellungsverfahren für solche Ultraschallwandler zur Verfügung zu stellen.

Diese erfindungsgemäße Aufgabe wird durch einen Ultraschallwandler gemäß Anspruch 1 sowie durch ein Herstellungsverfahren für einen solchen Ultraschallwandler gemäß Anspruch 9 gelöst. Vorteilhafte Ausführungsvarianten lassen sich jeweils den abhängigen Ansprüchen entnehmen.

Nachfolgend wird die vorliegende Erfindung zunächst allgemein, dann in Form mehrerer Ausführungsbeispiele im Detail beschrieben. Die in den einzelnen Ausführungsbeispielen in Verbindung miteinander realisierten einzelnen Merkmale bzw. Bauelemente der vorliegende Erfindung müssen dabei nicht genau in den in den Ausführungsbeispielen gezeichneten Konfigurationen verwirklicht sein, sondern können auch auf andere Art und Weise miteinander kombiniert werden. Insbesondere können einzelne der gezeigten Merkmale auch weggelassen werden oder auf andere Art und Weise mit anderen der gezeigten Merkmale kombiniert werden. Auch können bereits einzelne der in den Ausführungsbeispielen gezeigten Merkmale ohne die andere Merkmale des entsprechenden Ausführungsbeispiels für sich eine Verbesserung des Standes der Technik darstellen.

Ein erfindungsgemäßer Ultraschallwandler zur Anregung und/oder zur Detektion von Ultraschall mehrerer unterschiedlicher Frequenzen weist zunächst ein Substrat und mehrere jeweils zur Schallemmision anregbare und/oder zur Schalldetektion auslesbare Sensorelemente auf. Die mehreren Sensorelemente umfassen jeweils eine auf dem Substrat abgeschiedene piezoelektrische Schicht. Dabei ist es nicht notwendig, dass die piezoelektrischen Schichten unmittelbar d.h. angrenzend an das Substrat abgeschieden werden, sondern es können zwischen dem Substrat und den piezoelektrischen Schichten (z.B. ebenfalls abgeschiedene) Zwischenschichten wie Elektrodenschichten, Schutzschichten oder dergleichen vorhanden sein. Es ist jedoch auch möglich, die piezoelektrischen Schichten bei geeigneten Elektrodenkonfigurationen zur Kontaktierung der piezoelektrischen Schichten zumindest abschnittsweise unmittelbar auf dem Substrat abzuscheiden. Wesentliches Merkmal der vorliegenden Erfindung ist, dass sich die Dicke (senkrecht zur Substratebene, also die Schichtdicke) und/oder das Material der piezoelektrischen Schichten mehrerer der Sensorelemente voneinander unterscheidet/unterscheiden.

Zur Abscheidung der piezoelektrischen Schichten kann vorzugsweise ein Doppelringmagnetron eingesetzt werden. Jedoch ist es auch möglich, die piezoelektrischen Schichten mittels Gleichstrom-Sputtern oder mittels Hochfrequenzsputtern abzuscheiden. Die unterschiedliche Schichtdicke der einzelnen, den jeweiligen Sensorelementen zugeordneten piezoelektrischen Schichten oder Schichtabschnitte können dabei durch Abschattung bei der Beschichtung (Maskierung), durch inhomogene Abscheidung oder durch nachträglichen selektiven Abtrag homogen abgeschiedener Schichten bzw. Schichtabschnitte realisiert werden.

In einer ersten vorteilhaften Ausführungsvariante unterscheidet sich die Dicke der piezoelektrischen Schicht eines beliebigen der Sensorelemente jeweils von der Dicke der piezoelektrischen Schicht jedes der anderen Sensorelemente. Selbstverständlich können jedoch auch jeweils mehrere Sensorelemente identische Dicken ihrer piezoelektrischen Schichten aufweisen. Alternativ dazu oder auch in Kombination damit kann ein erfindungsgemäßer Ultraschallwandler auch so realisiert werden, dass sich das Material der piezoelektrischen Schicht eines beliebigen der Sensorelemente jeweils vom Material der piezoelektrischen Schicht jedes der anderen Sensorelemente unterscheidet (auch hier ist es selbstverständlich möglich, jeweils mehrere Sensorelemente ein und desselben Materials auszubilden und diese mit mehreren anderen Sensorelementen, deren piezoelektrische Schichten aus anderen Materialien bestehen, zu kombinieren).

Es ist dabei möglich, dass sich bei den piezoelektrischen Schichten der Sensorelemente ausschließlich die Dicken, nicht jedoch die Materialien voneinander unterscheiden. Ebenso ist es jedoch denkbar für alle piezoelektrischen Schichten der einzelnen Sensorelemente jeweils dieselbe Schichtdicke zu verwenden, wobei sich dann lediglich die Materialien der Schichten der einzelnen Sensorelemente voneinander unterscheiden.

In einer Ausführungsvariante der Erfindung können dabei die einzelnen Sensorelemente mit ihren piezoelektrischen Schichten in einer diskreten Array-Anordnung ausgebildet sein. Diskret bezieht sich hier auf die piezoelektrischen Schichten der einzelne Sensorelemente (so dass beispielsweise für alle Sensorelemente eine gemeinsame Top-Elektrode vorgesehen sein kann). Dabei ist unter diskreter Anordnung zu verstehen, dass die piezoelektrischen Schichten der einzelnen Sensorelemente beabstandet voneinander, also getrennt voneinander auf dem Substrat angeordnet sind. Bei einer solchen diskreten Array-Anordnung sind somit die piezoelektrischen Schichten der Sensorelemente in Form einer Mehrzahl einzelner, voneinander beabstandet angeordneter piezoelektrischer Schichtelemente mit zumindest teilweise unterschiedlicher Dicke und/oder unterschiedlichen Materialien ausgebildet. Die diskrete Array-Anordnung kann dabei eine Anordnung der piezoelektrischen Schichtelemente in einer eindimensionalen Reihe sein. Selbstverständlich ist es auch möglich, mit den einzelnen piezoelektrischen Schichtelementen (und somit auch mit den Sensorelementen) eine zweidimensionale Reihen- und Spaltenanordnung in Form z.B. eines quadratischen oder rechteckigen Flächenarrays auszubilden. Die einzelnen Sensorelemente bzw. Schichtelemente können dabei an den Kreuzungspunkten eines quadratischen oder rechteckigen Gitters angeordnet sein. Auch andere Anordnungen, z.B. konzentrische Anordnungen ringförmiger piezoelektrischer Schichtelemente um ein gemeinsames Zentrum, sind denkbar.

Die piezoelektrische Schicht eines Sensorelementes kann somit jeweils als diskretes, von den anderen Schichten der anderer Sensorelemente beabstandetes Schichtelement ausgebildet sein, das eine an die restlichen Bauelemente (insbesondere die Elektroden) des zugehörigen Sensorelementes angepasste Ausdehnung aufweist.

In einer weiteren vorteilhaften Ausführungsform können die Sensorelemente jedoch auch mit einer durchgehenden Flächenanordnung ihrer piezoelektrischen Schichten in Form einer gemeinsamen, sensorelementübergreifenden piezoelektrischen Gradientenschicht ausgebildet sein. Die Gradientenschicht ist dann hinsichtlich ihres Schichtdickenverlaufes so ausgebildet, dass sie am Ort mehrerer (bevorzugt aller) Sensorelemente jeweils eine unterschiedliche Dicke aufweist.

Es ist somit auch möglich, die den einzelnen Sensorelementen jeweils zugeordneten piezoelektrischen Schichten als Teilabschnitte einer größeren Flächenstruktur (der Gradientenschicht) auszubilden, wobei diese Flächenstruktur die Ausdehnung der übrigen Bauteile (insbesondere der Elektroden etc.) der einzelnen Sensorelemente übersteigt. Die piezoelektrische Gradientenschicht überspannt somit (in der Schichtebene des Ultraschallwandlers gesehen) eine Mehrzahl einzelner Sensorelemente bzw. deren Elektrodenstrukturen.

Vorzugsweise sind die erfindungsgemäßen Ultraschallwandler nicht nur zur Anregung, sondern gleichzeitig auch zur Detektion des Ultraschalls mehrerer unterschiedlicher Frequenzen ausgebildet. Vorzugsweise sind dabei die mehreren Sensorelemente jeweils unabhängig voneinander zur Schallemission anregbar und zur Schalldetektion auslesbar. Geeignete Elektrodenstrukturen und geeignete Schaltungen der Anregungs- und Ausleseelektronik sind dabei dem Fachmann bekannt. Siehe beispielsweise die EP 2 283 935 A1, die beschreibt, wie entsprechende Elektroden von Ultraschallwandler hergestellt werden können.

Vorteilhafterweise sind die mehreren Sensorelemente des Ultraschallwandlers unabhängig voneinander anregbar. Dabei kann die Ansteuerelektronik der Sensorelemente so ausgebildet sein, dass die einzelnen Sensorelemente zeitlich gesehen nacheinander angeregt werden. Ebenso ist jedoch eine zeitgleich versetzte Anregung der Schallemission so möglich, dass die Signale der einzelnen Sensorelemente phasenverzögert bzw. phasenverschoben sind. Die Anregung ist insbesondere mittels elektrischer Nadelimpulse (nachfolgend alternativ auch als Dirac-Impulse bezeichnet) möglich.

Alternativ dazu (oder durch eine geeignete Ausbildung der Elektronik auch in Kombination damit) ist es jedoch auch möglich, dass die einzelnen Sensorelement der vorliegenden Erfindung elektrisch zusammengeschaltet werden können und gemeinsam zur Schallemission anregbar sind (die Anregung kann wiederum mit Hilfe eines gemeinsamen elektrischen Nadelimpulses bzw. Dirac-Impulses durchgeführt werden).

Für die einzelnen piezoelektrischen Schichten (bzw. Schichtelemente) können die folgenden Materialen eingesetzt werden: AIN, ZnO, GaPO₄, AlPO₄, LiTaO₃, BaTiO₃ und/oder LiNbO₃.
Dabei können z.B. im Rahmen eines Sensorelementarrays mehrere unterschiedliche Materialien (die dann ggf. auch unterschiedliche Dicken aufweisen können) eingesetzt werden. Ebenso ist es jedoch möglich, alle piezoelektrischen Schichten bzw. Schichtelemente aus ein und demselben Material auszubilden, wobei dann die Schichtdicken der einzelnen Schichten unterschiedlich sind.

Als bevorzugte Substratmaterialien der vorliegenden Erfindung lassen sich Silizium, Quarz, Glas und Saphir nennen.

Die einzelnen Sensorelemente können erfindungsgemäß als auf dem Substrat abgeschiedene Metall-Isolator-Metall-Kondensatorstrukturen (MIM-Strukturen) ausgebildet sein, wobei die piezoelektrischen Schichten, die Dielektrika der Kondensatorstrukturen sind.

Bei einem erfindungsgemäßen Herstellungsverfahren für einen erfindungsgemäßen Ultraschallwandler werden die piezoelektrischen Schichten der einzelnen Sensorelemente mit unterschiedlicher Dicke dadurch auf dem Substrat abgeschieden, dass beim Abscheiden des Materials (oder auch der Materialien) der piezoelektrischen Schichten unterschiedliche Abscheidungsbereiche (also die den späteren Sensorelementen zuzuordnenden Flächenbereiche) unterschiedlich abgeschattet werden. Die unterschiedliche Abschattung kann durch unterschiedlich ausgebildete Maskierungen erreicht werden.

Es ist jedoch ebenso möglich, die piezoelektrischen Schichten der einzelnen Sensorelemente zunächst vollflächig ohne Maskierung abzuscheiden, wobei dann jedoch diese Abscheidung in der Schichtebene des späteren Ultraschallwandlers gesehen inhomogen erfolgt.

Schließlich ist es auch möglich, die piezoelektrischen Schichten vollflächig ohne Maskierung und homogen abzuscheiden, hiernach jedoch einen unterschiedlichen selektiven Abtrag der einzelnen piezoelektrischen Schichten in Dickenrichtung (also senkrecht zur Substratebene) durchzuführen.

Das vorbeschriebene inhomogene Abscheiden der piezoelektrischen Schichten kann insbesondere mittels eines Doppelringmagnetrons (wie es z.B. in Bartzsch, H., Gittner, M., Gloess, D., Frach P., Herzog, T., Walter, S., Heuer, H., "Piezoelectric AIN layers deposited by reative pulse magnetron sputtering", proceedings of the 2011 Technical Conference of the Society of Vacuum Coaters, beschrieben ist) durchgeführt werden, wobei beide Ringe des Doppelringmagnetrons unterschiedlich betrieben werden. Durch symmetrischen Betrieb der Ringe des Doppelringmagnetrons ist die vorbeschriebene homogene Abscheidung möglich, die dann einen nachträglichen selektiven Abtrag erfordert. Dieser Abtrag kann insbesondere durch Trockenätzen (beispielsweise durch Plasmaätzen oder lonenätzen) durchgeführt werden.

Die vorliegende Erfindung beschreibt somit einen Ultraschallwandler bzw. Ultraschallsensor zur Anregung und/oder zur Detektion von Ultraschallwellen in einem sehr breiten Frequenzbereich: Erfindungsgemäß lassen sich durch eine ausreichende Anzahl unterschiedlicher Sensorelemente mit unterschiedlichen Schichtdicken und/oder Materialien ihrer piezoelektrischen Schichten Frequenzbereiche von 5 MHz bis 2 GHz (oder auch darüber) abdecken, wobei dann über den gesamten Frequenzbereich verteilt einzelne Sensorelemente Schallwellen unterschiedlicher Frequenz abstrahlen und empfangen können. Es ist somit erfindungsgemäß möglich, in einem Medium (Festkörper oder Flüssigkeit) im Impulsecho- oder auch im Transmissionsmodus (je nach konkreter körperlicher Ausgestaltung des Ultraschallwandlers) die Frequenzabhängige Absorption, Dämpfung und/oder Schallgeschwindigkeit zu messen (also eine Schallabsorptionsspektroskopie oder Schallgeschwindigkeitspektroskopie durchzuführen). Dazu werden die Ultraschallsensoren erfindungsgemäß auf Basis einer Vielzahl unterschiedlich dicker Einzelelemente (gemeint ist hier die Schichtdicke der piezoelektrischen Schichten) aufgebaut, so dass sich jedes einzeln anregbare und auslesbare Element eines entsprechenden Sensorarrays anders verhält, also eine andere Resonanzfrequenz hat. In Summe strahlt der erfindungsgemäße Sensor in einem großen Frequenzbereich Ultraschallwellen aus.

Die Anregung jedes einzelnen Sensorelementes (bzw. der piezoelektrischen Schicht desselben über die beidseits davon angeordneten Elektroden -Top-elektrode und Bodenelektrode - desselben) kann dabei mit einem sehr kurzen elektrischen Nadelimpuls erfolgen, so dass jedes der Sensorelemente (bzw. dessen piezoelektrisches Schichtelement oder dessen piezoelektrischer Schichtabschnitt der Gradientenschicht) in seiner Eigenresonanz schwingt. Erfindungsgemäß wird also die Dickenresonanz genutzt, die maßgeblich durch die Dicken d der piezoelektrischen Schichten beeinflusst wird. Hierbei gilt d = λ/2 mit λ =c/f, wobei λ die Resonanzwellenlänge der piezoelektrischen Schicht ist, f die entsprechende Resonanzfrequenz ist, d die Schichtdicke dieser Schicht ist und c die Schallgeschwindigkeit in dieser Schicht ist. Je geringer also die Schichtdicke d der einzelnen piezoelektrischen Schicht (bzw. des Schichtabschnittes oder des Einzelelementes) desto höher ist deren Resonanzfrequenz.

Erfindungsgemäß werden die Ultraschallwandler in Dünnschichttechnologie realisiert, indem auf das Substrat (beispielsweise Silizium-, Quarz-, Glas- oder Saphirsubstrat) die piezoelektrischen Schichten abgeschieden werden. Dies kann beispielsweise in Form einer MIM-Kondensatorstruktur geschehen, mit der jeweiligen piezoelektrischen Schicht als Dielektrikum. Die piezoelektrische Schicht kann dabei unterschiedlich dick und/oder mit unterschiedlichem Material realisiert werden.

Angrenzend an diese piezoelektrischen Schichten (also darüber oder darunter) können Elektroden (Top-Elektroden und Boden-Elektroden) entsprechend der Anordnung einzelner piezoelektrischer Schichten bzw. der Sensorelemente in unterschiedlichen Konfigurationen, beispielsweise in Ring-, Linien- oder zweidimensionalen Matrixkonfigurationen angeordnet werden. Die einzelnen Elemente sind dabei je nach Dicke bzw. Material auf die zugehörigen, unterschiedlichen Resonanzfrequenzen eingestellt. Die Anzahl der Elemente und die Frequenzabstufung können grundsätzlich beliebig groß oder klein gewählt werden. Im Fall diskret ansteuerbarer Verschaltungen sind beispielsweise 256 unterschiedliche Elemente (also unterschiedlicher Dicke und/oder unterschiedlichen Materials) eine sinnvolle Größe. Da die einzelnen piezoelektrischen Schichten Dünnschichten sind (sie werden vorzugsweise mit unterschiedlichen Schichtdicken im Bereich zwischen 5 µm und 100 µm, bevorzugt zwischen 10 µm und 50 µm, abgeschieden), können auch unterschiedliche Materialien wie beispielsweise AIN, ZnO, GaPO₄, AlPO₄, LiTaO₃, BaTiO₃ und/oder LiNbO₃, kombiniert auf ein und demselben Substrat, abgeschieden werden. Der erfindungsgemäße Ultraschallwandler bzw. Spektroskopiesensor kann entweder in einem Stück (auf einem Substrat) realisiert werden oder auch aus mehreren Elementen unterschiedlicher Resonanzfrequenzen zusammengesetzt werden. Auch können zur Vergrößerung des Frequenzbereiches Elemente unterschiedlicher Materialien, z.B. niederfrequente PZT-Wandlerstrukturen und hochfrequente Dünnschichtwandlerstrukturen auf ein und demselben Substrat hergestellt werden.

Die unterschiedlichen Piezoschichtdicken werden durch Abschattung bei der Beschichtung (Maskierung), durch inhomogene Abscheidung oder auch durch nachträglichen selektiven Abtrag realisiert. Die Abscheidung der piezoelektrischen Schichten erfolgt vorzugsweise mit Hilfe eines Doppelringmagnetrons, wie es beispielsweise in P. Frach, C. Gottfried, H. Bartzsch, K. Goedicke: "The Double Ring Process Module - a Tool for Stationary Deposition of Metal, Insulators and Reactive sputtered Compounds", Surf.Coat.Technol. 90, 1997, 75-81, beschrieben ist. Dieses umfasst zwei zentrisch ineinander gesetzte zylindrische Magnetrons. Betreibt man nur jeweils einen der beiden Ringe, so erhält man eine sehr inhomogen abgeschiedene Piezoschicht. Durch Kombination beider Magnetronringe addieren sich jedoch die unterschiedlichen Abscheidungsresultate zu einer homogenen Schichtdicke. Werden somit erfindungsgemäß beide Magnetronringe identisch betrieben, so muss die Schichtdicke der abgeschiedenen piezoelektrischen Schichten anschließend für unterschiedliche Sensorelemente unterschiedlich abgedünnt werden. Es ist jedoch auch möglich, die beiden Ringe gezielt unterschiedlich zu betreiben, so dass sich eine inhomogene Abscheidung der piezoelektrischen Schichten mittels Dickengradienten ergibt.

Es sind jedoch grundsätzlich auch andere Verfahren, wie beispielsweise Gleichstrom-Sputtern oder Hochfrequenzsputtern denkbar.

Ist (nach homogener Abscheidung) ein selektiver Abtrag der einzelnen piezoelektrischen Schichten notwendig, um einen definierten Gradienten bzw. unterschiedliche Dicken zu erhalten, so kann dies mit Hilfe von Ätzverfahren, vorzugsweise von Trockenätzverfahren wie Plasmaätzen (chemische Wirkung) oder lonenätzen (physikalische Wirkung) erzielt werden.

Die vorliegende Erfindung hat insbesondere den Vorteil, dass sich auf technisch einfache Art und Weise ein zuverlässiger Aufbau von sehr breitbandigen Spektroskopiesensoren bzw. -wandlern realisieren lässt, der auch neue Anwendungsfelder sowie detailliertere Messergebnisse in der Ultraschallspektroskopie ermöglicht. Die erfindungsgemäßen Ultraschallspektroskopiesensoren bzw. Ultraschallwandler lassen sich insbesondere in der Materialwissenschaft zur Charakterisierung beispielsweise von Kunststoffen, Verbundwerkstoffen oder Keramiken einsetzen.

Nachfolgend wird die vorliegende Erfindung anhand von Ausführungsbeispielen beschrieben. Dabei zeigen
- Fig. 1: den Stand der Technik,
- Fig. 2: eine erste Ausführungsform eines erfindungsgemäßen Ultraschallwandlers,
- Fig. 3: eine zweiten Ausführungsform eines erfindungsgemäßen Ultraschallwandlers,
- Fig. 4: eine dritte und eine vierte Ausführungsform eines erfindungsgemäßen Ultraschallwandlers,
- Fig. 5: eine fünfte Ausführungsform eines erfindungsgemäßen Ultraschallwandlers,
- Fig. 6: eine sechste und siebte Ausführungsform eines erfindungsgemäßen Ultraschallwandlers,
- Fig. 7: verschiedene Ansteuervarianten der einzelnen Sensorelemente erfindungsgemäßer Ultraschallwandler,
- Fig. 8: ein zur Herstellung des erfindungsgemäßen Wandlers einsetzbares Doppelring-Magnetron und
- Fig. 9: ein Beispiel für eine Vorgehensweise bei der Herstellung eines erfindungsgemäßen Ultraschallwandlers.

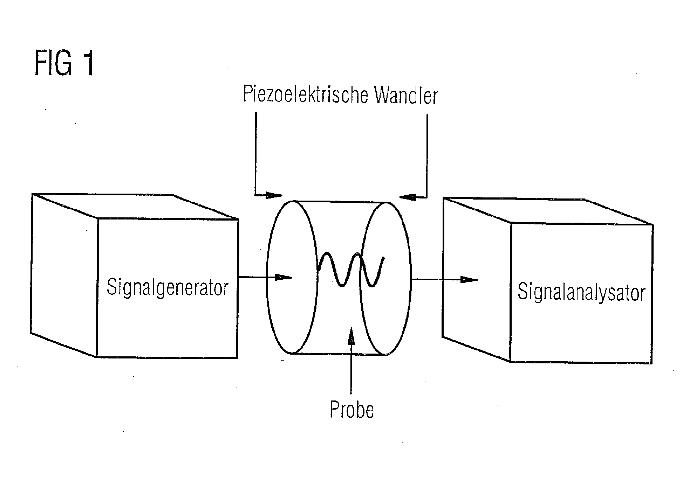

Fig. 1 zeigt den prinzipiellen Aufbau eines Ultraschallwandlersystems nach dem Stand der Technik zur Durchführung der Ultraschallspektroskopie im Transmissionsmodus. Ein Signalgenerator erzeugt ein Anregungssignal, das über einen ersten piezoelektrischen Wandler (links) in die Probe eingekoppelt wird. Dieses eingekoppelte Ultraschallsignal wird in der Probe durch die Eigenschaften des Probenwerkstoffs hinsichtlich seiner Geschwindigkeit und Dämpfung modifiziert und durch einen zweiten piezoelektrischen Wandler (rechts) wieder in ein elektrisches Signal gewandelt, das mit dem nachgeschalteten Signalanalysator hinsichtlich der vorbeschriebenen Modifikationen analysiert werden kann. Zur Einkopplung unterschiedlicher Ultraschallfrequenzen müssen die piezoelektrischen Wandler mechanisch (z.B. Revolversystem) gewechselt werden (nicht gezeigt). Die nachfolgend beschriebenen erfindungsgemäßen Ultraschallwandler können als Wandler im in Fig. 1 beschriebenen Aufbau eingesetzt werden, so dass gleichzeitig unterschiedliche Ultraschallfrequenzen in flächige Proben eingekoppelt werden und ausgewertet werden können. Die vorliegende Erfindung muss jedoch nicht im Transmissionsmodus eingesetzt werden, sondern kann auch im Reflexionsmodus eingesetzt werden, wobei dann ein einzelner erfindungsgemäßer Ultraschallwandler zur Anregung und zur Detektion der mehreren unterschiedlichen Ultraschallfrequenzen ausgebildet ist.

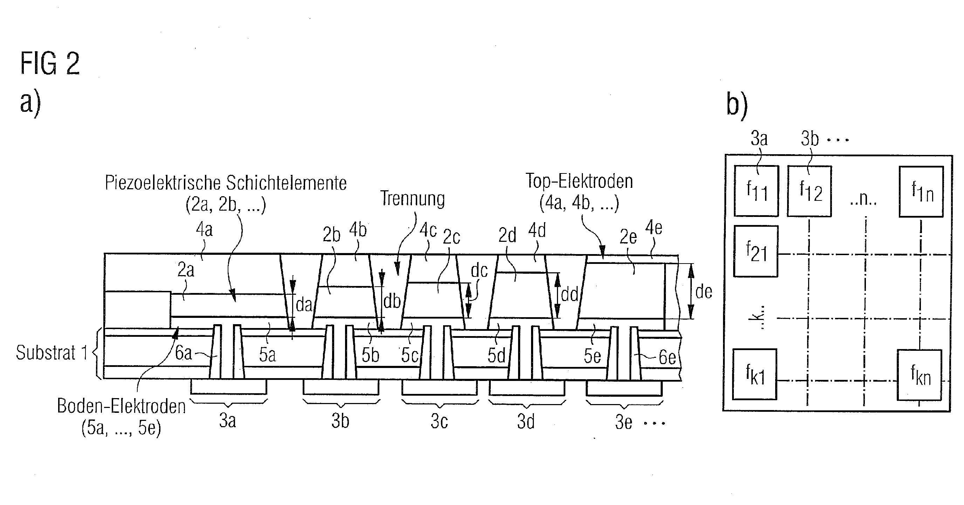

Fig. 2 zeigt einen ersten erfindungsgemäßen Ultraschallwander im Querschnitt senkrecht zur Schichtebene (vgl. Fig. 2a)) und als Skizze in Aufsicht zur Darstellung der Array-Konfiguration (vgl. Fig. 2b)). Dabei sind piezoelektrische Schichten in Form von Schichtelementen mit unterschiedlicher Resonanzdicke d mit ihren jeweils zugehörigen Top- bzw. Frontelektroden 4 in einen Ultraschallwandler integriert.

Wie Fig. 2a) zeigt, ist in einem flächigen Substrat 1 (hier: Silizium-Wafer) zur Ausbildung eines zweidimensionalen Zeilen- und Spaltenarrays von einzelnen Sensorelementen 3a, 3b, ... des gezeigten Ultraschallwandlers (zur zweidimensionalen Anordnung der einzelnen Sensorelemente 3a, 3b, ... in einem quadratischen Gitterraster vgl. auch Fig. 2b)) eine Vielzahl von Durchbrechungen bzw. Vias 6a, ... 6e, ..., ausgebildet, wobei die Vias das Substrat 1 in Richtung senkrecht zur Schichtebene vollständig durchbrechen. Die Vias 6a, ... sind mit leitfähigem Metall (hier: vorzugsweise Kupfer, Silber oder Aluminium, es ist aber auch Wolfram denkbar) ausgefüllt, das auf einer der Substratoberflächen (hier: der oben liegenden) mit den Boden-Elektroden 5a, ... 5e... der einzelnen Sensorelemente 3a, ... verbunden ist. Auch die unmittelbar auf der oben liegenden Oberfläche des Substrats 1 abgeschiedenen Boden-Elektroden 5a, ... sind hier vorzugsweise aus Aluminium, Platin, Kupfer oder Gold ausgebildet. Auf der gegenüberliegenden Substratseite (Unterseite) sind ebenfalls vorzugsweise aus Aluminium, Platin, Kupfer oder Gold ausgebildete, flächige elektrische Kontakte unmittelbar auf dem Substrat abgeschieden, die über die Füllung der Vias 6a, ... elektrisch leitend mit den Bodenelektroden 5a, ... verbunden sind und über die die einzelnen Sensorelemente 3a, ... mit der hier nicht gezeigten Anregungs- und/oder Detektionselektronik des erfindungsgemäßen Ultraschallwandlers verbunden sind.

Auf ihrer dem Substrat 1 abgewandten Oberseite tragen die einzelnen elektrisch voneinander isolierten und in einem zweidimensionalen Zeilen- und Spaltenarray angeordneten Boden-Elektroden 5a, ... jeweils eine abgeschiedene piezoelektrische Schicht, die als diskretes piezoelektrisches Schichtelement ausgebildet ist. Die unmittelbar an die Boden-Elektroden 5a,... angrenzenden piezoelektrischen Schichtelemente 2a, 2b, ... der einzelnen Sensorelemente 3a, 3b, ... sind somit ebenfalls (wie auch die nachfolgend noch beschriebenen Top-Elektroden 4a, ... der Sensorelemente) in Form eines zweidimensionalen Zeilen- und Spaltenrasters bzw. -arrays angeordnet.

Zur Anregung und/oder zur Detektion von Ultraschall mit unterschiedlichen Frequenzen weisen die einzelnen piezoelektrischen Schichtelemente 2a, 2b ... jeweils eine unterschiedliche Dicke d auf. Für die in Fig. 2a) skizzierten fünf einzelnen piezoelektrischen Schichtelemente 2a - 2e gilt für die zugehörigen Schichtdicken senkrecht zur Schichtebene da < db < dc< dd < de (dabei ist da die Schichtdicke des piezoelektrischen Schichtelementes 2a, db diejenige des Elementes 2b u.s.w.). Damit ergeben sich jeweils unterschiedliche Resonanzwellenlängen der einzelnen piezoelektrischen Schichtelemente gemäß der Formel d =λ/2, wobei d die Dicke des jeweiligen piezoelektrischen Schichtelementes ist.

Im vorliegenden Fall wurden die Top-Elektroden 4a, ... der einzelnen piezoelektrischen Schichtelemente 2a, ... mit unterschiedlicher Dicke und unmittelbar auf die piezoelektrischen Schichtelemente 2a,... so aufgebracht, dass die einzelnen Sensorelemente 3a, 3b, ... trotz unterschiedlicher Dicke d ihrer zugehörigen piezoelektrischen Schichten 2a, ... eine identische Gesamtdicke senkrecht zur Schichtebene des Substrats 1 aufweisen (diese Gesamtdicke ergibt sich durch Summe der Dicke der jeweiligen Boden-Elektrode 5, piezoelektrischen Schicht 2 und Top-Elektrodenschicht 4). Wie Fig. 2a) zeigt, sind die einzelnen Sensorelemente 3a, 3b vollständig voneinander getrennt, insbesondere sind die Gräben zur Trennung der einzelnen Sensorelemente 3a, 3b auf der Oberseite des Substrats 1 (senkrecht zur Schichtebene gesehen) über die gesamte Ausdehnung der Top-Elektroden, piezoelektrischen Schichtelemente und Boden-Elektroden bis auf die Oberfläche des Substrats 1 ausgebildet. Wie Fig. 2b) skizziert, sind im zweidimensionalen Array der Sensorelemente des gezeigten Ultraschallwandlers in Zeilenrichtung insgesamt jeweils n und in Spaltenrichtung insgesamt jeweils k einzelne Sensorelemente ausgebildet, so dass der Ultraschallwandler insgesamt n ·k unterschiedliche Frequenzen f₁... f₁ₙ ... fₖ₁...fₖₙ anregen und/oder detektieren kann. So lässt sich z.B. die Dicke d der piezoelektrischen Schichtelemente zwischen 10 µm und 50 µm variieren, um Ultraschallfrequenzen zwischen 100 MHz und 500 MHz zu erzeugen.

Die Boden-Elektroden 5a, ... lassen sich (ebenso wie die Top-Elektroden 4a, ...) beispielsweise durch Kathodenzerstäubung (Sputtern) oder auch durch plasmachemische oder chemische Beschichtungstechniken abscheiden. Die Strukturierung der Trennung zwischen den einzelnen Elektroden lässt sich durch Ätzen, insbesondere durch Trockenätzen in Form von chemischem Ätzen oder Plasmaätzen oder durch reaktives lonenätzen oder auch durch Laserstrukturierung herstellen. Das danach folgende Abscheiden der einzelnen piezoelektrischen Schichtelemente 2a, ... kann durch homogene Abscheidung im Doppelringmagnetron realisiert werden, wobei dann die unterschiedliche Dicke der einzelnen piezoelektrischen Schichten 2a, 2b, ... ebenfalls durch nachträgliches Ätzen (insbesondere: Trockenätzen) realisiert wird. Alternativ dazu ist es jedoch auch möglich, durch unterschiedlichen Ringbetrieb am Doppelringmagnetron unterschiedliche Schichtdicken (Gradientenschicht) für die Piezoelemente bereits beim Abscheiden zu realisieren. Die Trennung bzw. die Auseinzelung der Piezoelemente kann dann ebenfalls durch Trockenätzen oder auch durch Laserstrukturierung realisiert werden (entsprechendes gilt für die schließlich auf den Piezoelementen aufgebrachten bzw. abgeschiedenen Top-Elektroden).

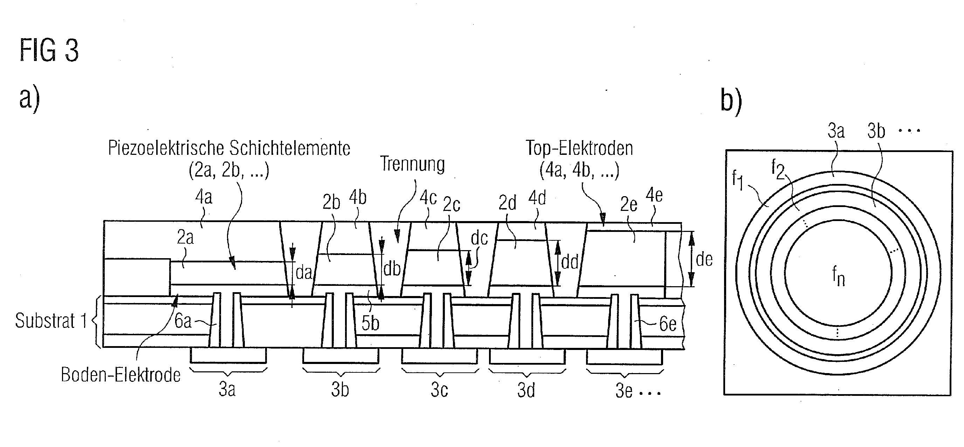

Fign. 3a) (Schnitt senkrecht zur Schichtebene des Substrats 1) und 3b) (Skizze in Aufsicht) zeigen einen weiteren erfindungsgemäßen Ultraschallwandler, der grundsätzlich wie der in Fign. 2a) und 2b) gezeigte aufgebaut ist (so dass nachfolgend lediglich die Unterschiede beschrieben werden), wobei jedoch in diesem Fall die piezoelektrischen Schichtelemente 2 (und somit auch der einzelnen Sensorelemente - die den piezoelektrischen Schichtelementen 2 zugeordneten Elektroden 4, 5 sind jeweils hinsichtlich ihrer Gestalt in der Schichtebene identisch wie die piezoelektrischen Schichtelemente ausgebildet) als Kreisringe in einer konzentrischen Anordnung ausgebildet sind. Gleiche Bezugszeichen bezeichnen in Fig. 3 gleiche oder sich entsprechende Bauelemente des Ultraschallwandlers gem. Fig. 2. Im in Fig. 3 gezeigten Fall können somit, vgl. Fig. 3b), mit insgesamt n kreisringförmigen piezoelektrischen Schichten bzw. Sensorelementen 3a, 3b, ... jeweils unterschiedlicher Schichtdicke d n unterschiedliche Ultraschallfrequenzen angeregt und detektiert werden.

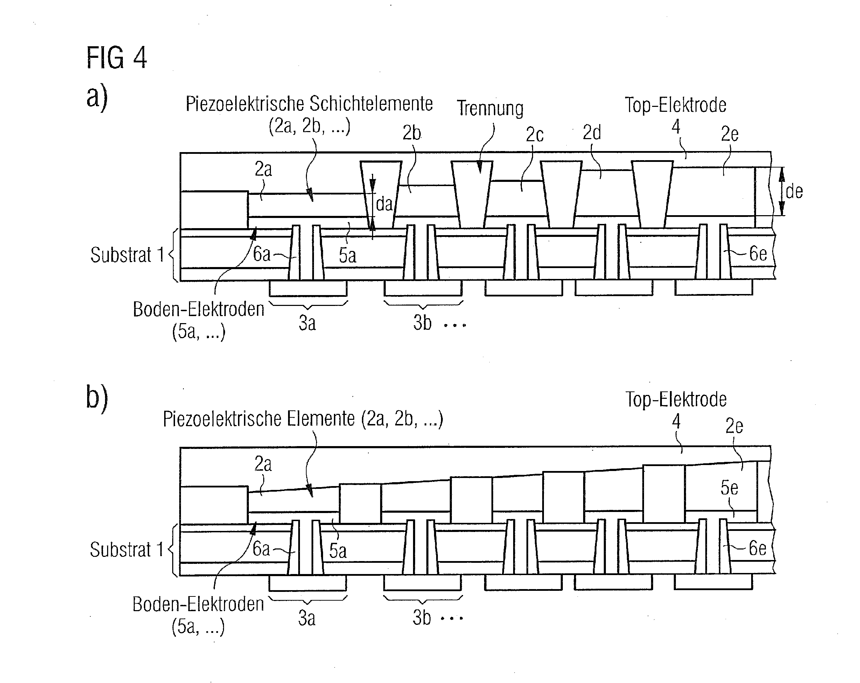

Fig. 4a) zeigt eine weitere erfindungsgemäße Ausführungsform eines Ultraschallwandlers, die grundsätzlich ebenso wie die in Fign. 2a) und 2b) gezeigte ausgebildet ist, so dass nachfolgend nur die Unterschiede beschrieben werden. Im in Fig. 4a) gezeigten Fall sind die Top-Elektroden 4a, ... des Wandlers aus Fig. 2 durch eine durchgehenden Top-Elektrode 4, die einen gemeinsamen Frontkontakt der einzelnen piezoelektrischen Schichtelemente 2a, 2b, ... ausbildet, ersetzt. Die Ansteuerung ist dabei analog, nur dass die Frontelektrode die Masse-Elektrode ist. Dies verringert den Herstellungs- und Kontaktierungsaufwand, da bereits im Sensor die Masse vorliegt.

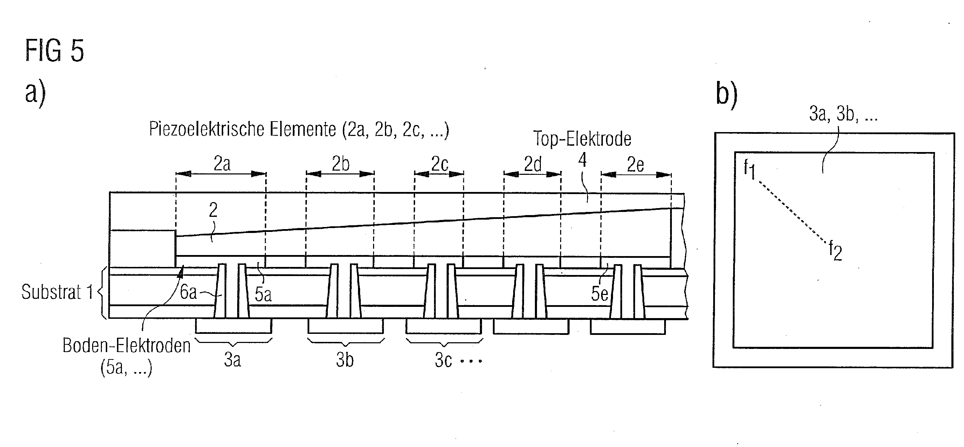

Fig. 4b) zeigt eine weitere Ausführungsvariante, die grundsätzlich wie die in Fig. 4a) gezeigte ausgeführt ist, wobei hier jedoch die piezoelektrischen Elemente 2a, 2b, .., dadurch erhalten wurden, dass über die gesamte Schichtfläche des Wandlers zunächst eine Gradientenschicht variierender Dicke als gemeinsame piezoelektrische Schicht (vgl. auch Fig. 5a)) abgeschieden wurde, die dann zur Ausbildung der einzelnen piezoelektrischen Elemente 2a, 2b, ... bzw. der Trennung zwischen denselben bereichsweise durch Ätzung vollständig entfernt wurde. Hierdurch haben die einzelnen piezoelektrischen Elemente 2a, 2b, ... keine konstante Dicke d, sondern eine variierende Dicke über ihren Flächenquerschnitt. Jedoch sind hier die mittleren Dicken der einzelnen piezoelektrischen Elemente 2a, 2b, ... unterschiedlich, so dass sich unterschiedliche Resonanzfrequenzen der einzelnen piezoelektrischen Elemente ergeben. Die Top-Elektrode 4 ist, wie in Fig. 4a) gezeigt, als durchgehenden Einzelelektrode ausgebildet.

Fign. 5a) und 5b) zeigen eine weitere Ausführungsform eines erfindungsgemäßen Ultraschallwandlers, die grundsätzlich wie die in Fig. 4b) gezeigte ausgebildet ist, wobei hier jedoch der Schritt des bereichsweisen Ätzens der piezoelektrischen Gradientenschicht 2 zur Auftrennung der einzelnen piezoelektrischen Elemente entfallen ist. Im Gegensatz zu Fig. 4b), die eine elementweise getrennte Piezoschicht zeigt, ist hier somit eine durchgehende, also sensorelementübergreifende Piezomaterialschicht erhalten geblieben.

Die einzelnen piezoelektrischen Schichten 2a, 2b, ... sind im gezeigten Fall somit als Abschnitte unterschiedlicher Dicke d ein und derselben, als Gradientenschicht variierender Dicke abgeschiedenen Piezomaterialschicht 2 ausgebildet.

Wie Fig. 5b) zeigt, ist der Ultraschallwandler dieses Ausführungsbeispiels somit als flächiger Schwinger mit Schichtdickengradienten zur Erzeugung von unterschiedlichen Resonanzfrequenzen im Bereich [f₁, f₂] ausgebildet (die Ausführungsbeispiele aus den Fign. 2 bis 4b) zeigen demgegenüber jeweils Arrays unterschiedlicher Form mit diskreten Elementen mit je einer Resonanzfrequenz pro Sensorelement). Die in Fign. 5a) und 5b) gezeigte Variante des erfindungsgemäßen Ultraschallwandlers kann auch (hier nicht gezeigt) als flächiger Schwinger mit Schichtdickengradienten und mit Gräben zur mechanischen Entkopplung ausgebildet sein.

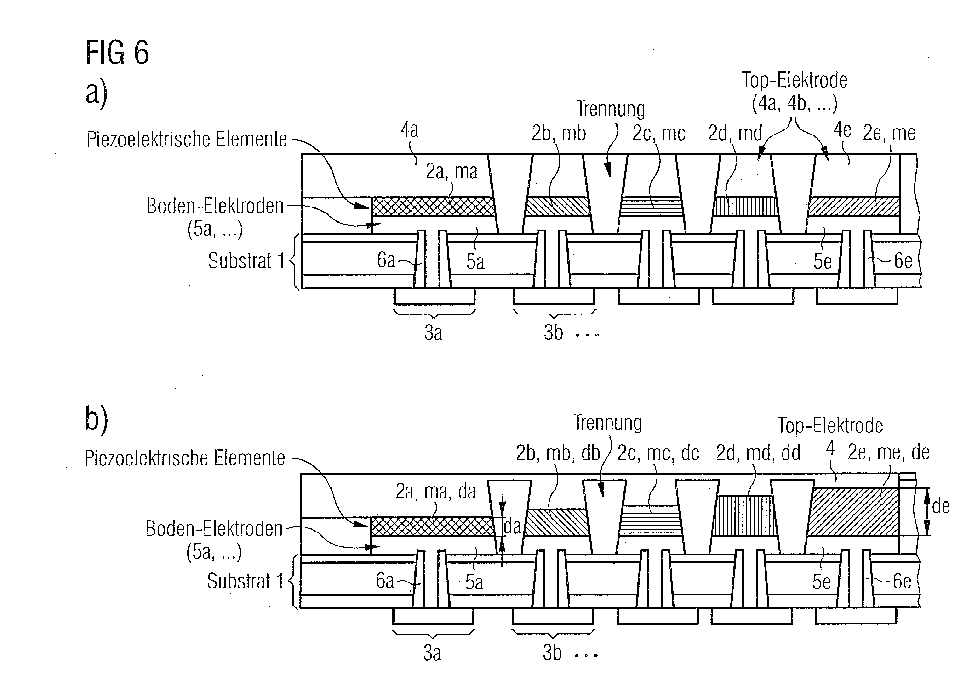

Fig. 6a) zeigt eine weitere erfindungsgemäße Ausführungsvariante eines Ultraschallwandlers, bei der die einzelnen Bauelemente wiederum wie in den Fign. 2a) und 2b) gezeigt ausgebildet sind, wobei nachfolgend lediglich die Unterschiede beschrieben sind. Im Gegensatz zu den unterschiedliche Schichtdicken d aufweisenden piezoelektrischen Schichtelementen 2a, 2b, ... in Fig. 2 weisen die einzelnen piezoelektischen Schichtelemente 2a, 2b, ... in Fig. 6a) eine identische Schichtdicke d im Bereich zwischen 5 µm und 50 µm auf. Zur Erzeugung unterschiedlicher Resonanzfrequenzen sind im Fall von Fig. 6a) nun jedoch die einzelnen piezoelektrischen Schichtelemente 2a, ... aus unterschiedlichen Piezomaterialien m ausgebildet (ma bezeichnet das Piezomaterial des piezoelektrischen Schichtelementes 2a, mb dasjenige des Elementes 2b u.s.w.). Da die Schichtdicke der einzelnen piezoelektrischen Elemente 2 hier identisch ist, weisen auch die einzelnen Top-Elektroden 4a, 4b, ... identische Dicken (senkrecht zur Substratebene gesehen) auf.

Fig. 6b) zeigt schließlich eine letzte erfindungsgemäße Ausführungsvariante, die die Merkmale der Variante aus den Fign. 2a) und 2b) einerseits und derjenigen aus Fig. 6a) andererseits miteinander kombiniert. Mit anderen Worten sind hier die einzelnen piezoelektrischen Schichtelemente 2a, 2b, ... sowohl aus unterschiedlichen Piezomaterialien ma, mb, ..., als auch mit unterschiedlichen Schichtdicken da, db, ... ausgebildet. Dabei sind die unterschiedlichen Abscheidungsraten zu beachten. Aufgrund der bei der Abscheidung auftretenden Erwärmung sind auch die Substrattemperaturen zu beachten; unterschiedliche Ausdehnungskoeffizienten werden durch entsprechende Spaltabstände ausgeglichen (somit ist eine weiche Füllung denkbar).

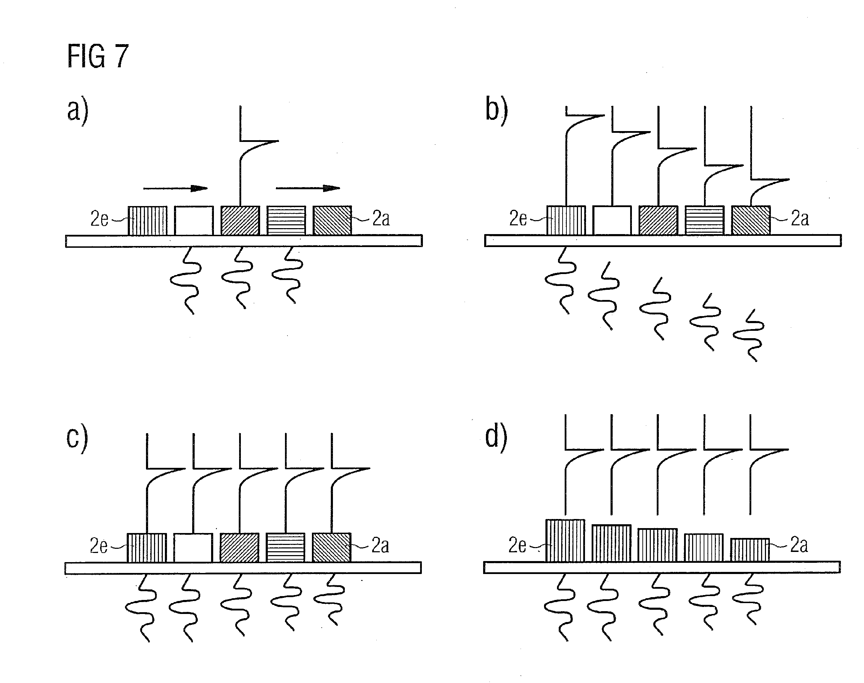

Wie Fig. 7 andeutet, können alle einzelnen Schichtelemente 2a, ..., 2e, ... bzw. Sensorelemente 3 individuell nacheinander oder zeitgleich versetzt (phasenverzögert) angeregt werden. Es können aber auch alle Elemente 2a, ... 2e, ... zusammengeschaltet und mit einem einzelnen Impuls (beispielsweise Dirac-Impuls oder kurzer Burst) angeregt werden. Zum Empfang der Schallwellen können entweder die einzelnen Elemente diskret ausgelesen werden, oder es kann eine Parallel-Schaltung mehrerer oder aller Elemente zum Auslesen eines Summensignals realisiert werden. Die Ultraschallwellen können dabei entweder durch das Substrat 1 (also den Träger der aktiven Struktur) oder auch durch die Front- bzw. Top-Elektroden in das zu charakterisierende Medium bzw. die Probe eingekoppelt werden. Die durch das Medium transmittierte Welle (falls der Ultraschallwandler im Transmissionsmodus eingesetzt wird) bzw. die aus dem Medium zurücklaufende Welle (Reflexionsmodus) kann ebenso durch das Substrat 1 oder durch die Top- bzw. Frontelektrode in den Sensor eingekoppelt werden.

Die elektrische Ansteuerung kann in Abhängigkeit von der Applikation unterschiedlich realisiert werden. So kann der Spektroskopiesensor an einem Generator mit Multiplexer betrieben werden und die einzelnen Kanäle können nacheinander angesprochen werden. Es ist jedoch auch möglich, ein klassisches Phased-Array-Gerät mit 16 bis 64 Kanälen zu verwenden und die Anregungen an die einzelnen Elektroden abzugeben.

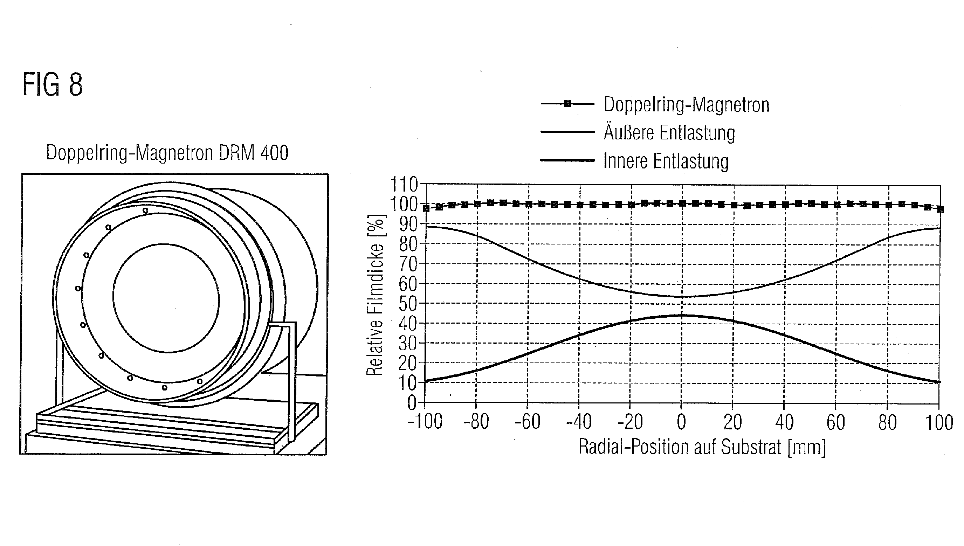

Fig. 8 skizziert ein Doppelring-Magnetron, das zur erfindungsgemäßen Ausbildung der piezoelektrischen Schichten 2 eingesetzt werden kann. Dabei ergibt sich eine Überlagerung der Abscheidungsverteilungen der beiden konzentrischen Entladungsringe, wie in der Fig. 8 rechts gezeigt.

Die unterschiedlichen Schichtdicken der piezoelektrischen Schicht(en) 2, 2a, 2b, ... können entweder durch Abschattung bei der Beschichtung (Maskierung), durch inhomogene Abscheidung oder auch durch nachträglichen selektiven Abtrag realisiert werden. Die Abscheidung der piezoelektrischen Schichten kann dabei, wie bereits beschrieben, vorzugsweise mit einem aus dem Stand der Technik bekannten Doppelringmagnetron realisiert werden, das aus zwei zentrisch ineinander gesetzten zylindrischen Magnetronen besteht. Betreibt man nur jeweils einen der beiden Magnetronringe, so erhält man eine sehr inhomogen abgeschiedene Piezoschicht. Erst durch Kombination beider Magnetronringe addieren sich die unterschiedlichen Abscheidungsresultate zu einer homogenen Schichtdicke. Für eine inhomogene Abscheidung der piezoelektrischen Schicht mittels Dickengradienten können die beiden Ringe gezielt unterschiedlich betrieben werden. Hierzu kann jeweils eine DC-Plasmaentladung erzeugt werden, die durch die Magneten beeinflusst werden kann (hierbei kommt es auch auf die Lage des Substrates in der Kammer an). Man kann dazu die Targets (Kathode) und die Anode unterschiedlich verschalten und mit gepulster Gleichspannung unterschiedlich anregen. Es werden somit ionisierte Teilchen mit unterschiedlicher Energie (unterschiedliches Plasma) erzeugt, so dass ein unterschiedlich starker Beschuss der Substratoberfläche erfolgt. Ebenfalls kann eine unterschiedliche Orientierung der abgeschiedenen Teilchen realisiert werden. Somit lassen sich unterschiedliche Kristallstrukturen, Dicken und Kristallorientierungen erzeugen.

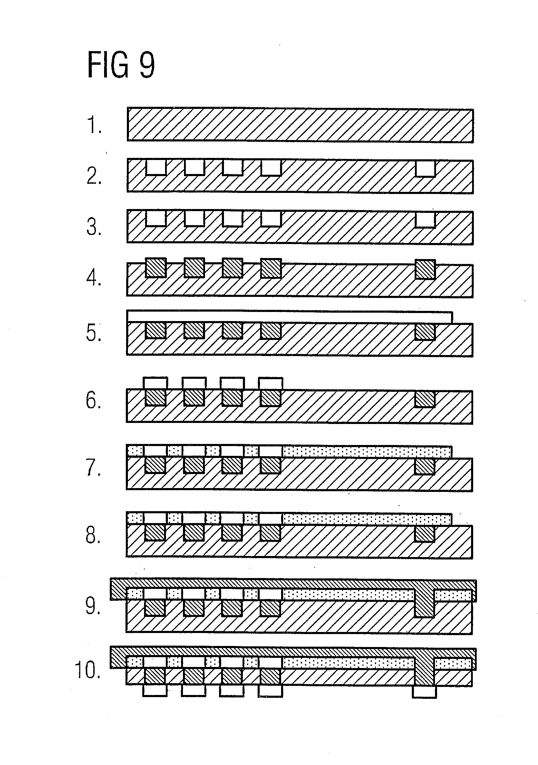

Fig. 9 zeigt schließlich eine beispielhafte Vorgehensweise, wie die einzelnen in den Fign. 2.6 gezeigten Bauelemente bzw. Schichten der erfindungsgemäßen Ultraschallwandler nacheinander aufgebracht werden können:
1. Substrat markieren
2. Plasmachemisches Ätzen Vias (ins Substrat)
3. Thermische Oxidation (Isolierung)
4. Metallisierung Vias und Bodenelektrode
5. Abscheidung elementübergreifender piezoelektrischer Flächenschicht
6. Strukturieren dieser Flächenschicht in einzelne piezoelektrische Schichten bzw. Schichtelemente
7. Füllen Trennungen mit Polymermaterial
8. Abätzen unterschiedlicher Schichtelemente auf unterschiedliche Dicken
9. Abscheiden Metallisierung für die Gegenelektrode (Top-Elektrode)
10. Rückseite des Substrats abdünnen und Kontaktierung bei Maskierung abscheiden

## Patentansprüche

1. Ultraschallwandler zur Anregung und/oder zur Detektion von Ultraschall mehrerer unterschiedlicher Frequenzen aufweisend
ein Substrat (1) und
mehrere jeweils zur Schallemission anregbare und/oder zur Schalldetektion auslesbare Sensorelemente (3a, 3b, ...), die jeweils eine auf dem Substrat abgeschiedene piezoelektrische Schicht (2a, 2b, ...) umfassen,
wobei sich die Dicke (da, db, ...) und/oder das Material (ma, mb, ...) der piezoelektrischen Schichten mehrerer der Sensorelemente (3a, 3b, ...) voneinander unterscheidet/n.

2. Ultraschallwandler nach dem vorhergehenden Anspruch,
***dadurch gekennzeichnet, dass***
sich die Dicke (da) der piezoelektrischen Schicht (2a) eines beliebigen (3a) der Sensorelemente jeweils von der Dicke (db, ...) der piezoelektrischen Schicht (2b, ...) jedes der anderen Sensorelemente (3b, ...) unterscheidet
und/oder
dass sich das Material (ma) der piezoelektrischen Schicht (2a) eines beliebigen (3a) der Sensorelemente jeweils vom Material (mb, ...) der piezoelektrischen Schicht (2b, ...) jedes der anderen Sensorelemente (3b, ...) unterscheidet.

3. Ultraschallwandler nach einem der vorhergehenden Ansprüche,
***dadurch gekennzeichnet, dass***
sich lediglich Dicken (da, db, ...), nicht jedoch Materialien (ma, mb, ...) von piezoelektrischen Schichten (2a, 2b, ...) von Sensorelementen (3a, 3b, ...) voneinander unterscheiden
oder
dass sich lediglich Materialien (ma, mb, ...), nicht jedoch Dicken (da, db, ..) von piezoelektrischen Schichten (2a, 2b, ...) von Sensorelementen (3a, 3b, ...) voneinander unterscheiden.

4. Ultraschallwandler nach einem der vorhergehenden Ansprüche,
***dadurch gekennzeichnet, dass***
mehrere, bevorzugt alle der Sensorelemente (3a, 3b, ...) wie folgt ausgebildet sind:
mit einer diskreten Arrayanordnung ihrer piezoelektrischen Schichten (2a, 2b, ...) in Form einer Mehrzahl einzelner, voneinander beabstandet angeordneter piezoelektrischer Schichtelemente zumindest teilweise unterschiedlicher Dicken (da, db, ...) und/oder Materialien (ma, mb, ...),
wobei die diskrete Arrayanordnung bevorzugt eine eindimensionale Reihenanordnung, eine zweidimensionale Reihen- und Spaltenanordnung oder eine konzentrische Anordnung ist.

5. Ultraschallwandler nach einem der vorhergehenden Ansprüche,
***dadurch gekennzeichnet, dass***
mehrere, bevorzugt alle der Sensorelemente (3a, 3b, ...) wie folgt ausgebildet sind: mit einer durchgehenden Flächenanordnung ihrer piezoelektrischen Schichten (2a, 2b, ...) in Form einer gemeinsamen piezoelektrischen Gradientenschicht (2) für diese Sensorelemente (3a, 3b, ...), die für mindestens zwei, bevorzugt jedoch für alle diese Sensoreiemente (3a, 3b, ...) eine unterschiedliche Dicke (da, db, ...) aufweist.

6. Ultraschallwandler nach einem der vorhergehenden Ansprüche,
***dadurch gekennzeichnet, dass***
der Ultraschallwandler zur Anregung und zur Detektion von Ultraschall mehrerer unterschiedlicher Frequenzen ausgebildet ist, insbesondere, dass die mehreren Sensorelemente (3a, 3b, ...) jeweils unabhängig voneinander zur Schallemission anregbar und zur Schalidetektion auslesbar sind.

7. Ultraschallwandler nach einem der vorhergehenden Ansprüche,
***dadurch gekennzeichnet, dass***
die mehreren Sensorelemente (3a, 3b, ...) unabhängig voneinander, bevorzugt einzeln nacheinander oder zeitgleich versetzt, also phasenverzögert, zur Schallemission anregbar sind, insbesondere mittels elektrischer Nadelimpulse, also Dirac-Impulse, anregbar sind,
und/oder
dass die mehreren Sensorelemente (3a, 3b, ...) elektrisch zusammenschaltbar und gemeinsam zur Schallemission anregbar sind, insbesondere mittels eines gemeinsamen elektrischen Nadelimpulses, also Dirac-Impulses, anregbar sind.

8. Ultraschallwandler nach einem der vorhergehenden Ansprüche,
***dadurch gekennzeichnet, dass***
das/die Material(ien) (ma, mb, ...) der piezoelektrischen Schichten ausgewählt ist aus mindestens einem der nachfolgenden Materialien: AIN, ZnO, GaPO4_{,} AlPO₄, LiTaO₃, BaTiO₃ und/oder LiNbO₃
und/oder
dass das Substrat (1) Silizium, Quarz und/oder Saphir enthält oder daraus besteht
und/oder
dass mindestens eines der, bevorzugt mehrere der oder alle Sensorelemente (eine) auf dem Substrat (1) abgeschiedene Metall-Isolator-Metall-Kondensatorstruktur(en) mit seiner/ihren piezoelektrischen Schicht(en) als Dielektrikum/Dielektrika der Kondensatorstruktur(en) ist/sind.

9. Herstellungsverfahren für einen Ultraschallwandler nach einem der vorhergehenden Ansprüche,
wobei piezoelektrische Schichten (2a, 2b, ...) von Sensorelementen (3a, 3b, ...) mit unterschiedlicher Dicke (da, db, ...) auf dem Substrat (1) abgeschieden werden, indem
● beim Abscheiden des/der Materials/ien dieser piezoelektrischen Schichten (2a, 2b, ...) unterschiedliche Abscheidungsbereiche unterschiedlich abgeschattet werden, insbesondere durch unterschiedliche Maskierungen abgeschattet werden,
● diese piezoelektrischen Schichten (2a, 2b, ...) vollflächig ohne Maskierung, jedoch inhomogen abgeschieden werden,
und/oder
● diese piezoelektrischen Schichten (2a, 2b, ...) zwar vollflächig ohne Maskierung und homogen abgeschieden werden, hiernach jedoch für diese piezoelektrischen Schichten (2a, 2b, ...) ein unterschiedlicher selektiver Abtrag durchgeführt wird.

10. Herstellungsverfahren nach dem vorhergehenden Anspruch,
***dadurch gekennzeichnet, dass***
das Abscheiden der piezoelektrischen Schichten (2a, 2b, ...) mittels eines Doppelringmagnetrons erfolgt, wobei beim inhomogenen Abscheiden der piezoelektrischen Schichten (2a, 2b, ...) die beiden Ringe des Doppelringmagnetrons unterschiedlich betrieben werden.

11. Herstellungsverfahren nach einem der beiden vorhergehenden Ansprüche,
***dadurch gekennzeichnet, dass***
der selektive Abtrag durch Trockenätzen, insbesondere durch Plasmaätzen oder lonenätzen, durchgeführt wird.
